# EUROPÄISCHE PATENTSCHRIFT

(11) **EP 0 637 364 B1**
(45) Veröffentlichungstag und Bekanntmachung des Hinweises auf die Patenterteilung: **23.10.1996**
(21) Anmeldenummer: 93909373.8
(22) Anmeldetag: 20.04.1993
(51) Int. Cl.: F16K 1/226

(54) **KLAPPENACHSENABDICHTUNG**
PACKING FOR THE AXIS OF A CLACK VALVE
ETOUPAGE DE L'AXE DE CLAPETS D'ARRET

(30) Priorität: 24.04.1992 DE 4213522
(43) Veröffentlichungstag der Anmeldung: 08.02.1995
(73) Patentinhaber: KSB Aktiengesellschaft, D-67227 Frankenthal (DE)
(72) Erfinder: WATTIGNIER, Claude, F-33400 Talence (FR); DUBOIS, Jean-Paul, F-33230 Contras (FR)
(86) Internationale Anmeldenummer: EP9300944
(87) Internationale Veröffentlichungsnummer: WO9322587

(56) Entgegenhaltungen:
- DE-A- 1 475 972
- DE-A- 3 203 374
- FR-A- 2 069 639

## Beschreibung

Eine Absperrklappe mit elastischer Manschette zum Absperren des Durchflusses in einem Leitungssystem ist ein in der Technik gut bekanntes Produkt. Oft wird ein Modell in einer Vielzahl von Nennweiten und in großer Stückzahl hergestellt.

Der Benutzer erwartet von einer solchen Absperrklappe ein sicheres Absperren des Durchflusses eines Fördermediums durch hohe Dichtheit und geringe Leckrate an der Klappenscheibe sowie eine absolute Dichtheit des Innenraumes gegen die Umwelt, sowohl an den Anschlußflanschen als auch am Durchgang der Klappenachse zur Betätigung der Absperrklappe.

Die in großer Stückzahl verwendeten Absperrklappen sind in der Regel robust, einfach herzustellen und wirtschaftlich kostengünstig. Sie zeichnen sich durch eine sehr einfache Gestaltung der Manschette aus, welche achsensymmetrisch ist und lediglich zwei zylindrische Öffnungen zum Durchlaß der Klappenachse aufweist. Diese Ausführung hat jedoch den Nachteil, daß die Dichtungswirkung an der Klappenachse unzureichend ist und das Fördermedium in das Gehäuse eindringt oder die Klappenachse benetzt. Dies kann zu großen Schäden führen.

Zur Behebung dieses Nachteils sind verschiedene Lösungswege eingeschlagen worden. Die DE-A-2 843 833 zeigt die Kombination zweier Merkmale, welche beide die Dichtheit erhöhen. Zum einen bewirkt die Ausformung von Wellen an der Dichtfläche der Klappenachse eine Verbesserung des Andruckes des elastischen Materials der Manschette, zum anderen werden hierdurch mehrere Kammern gebildet, welche einen Druckabbau oder einen Druckaufbau gegen den Umgebungsdruck im Gehäuse bewirken und das Fördermedium am Austreten hindern. Das zweite Merkmal kann darin gesehen werden, daß die Abdichtung der Klappenachse zur Klappenscheibe hin durch die Ausbildung eines Kragens aus elastischem Material verbessert wird, indem durch Verformung des Kragens eine Druckerhöhung an der Dichtfläche hervorgerufen wird.

Eine weitere bekannte Lösung zur Vermeidung der Undichtheit besteht in der Verstärkung der Durchlaßöffnungen der Klappenachse mit in die Manschette eingebetteten Metalleinlagen. Diese bewirken, daß das elastische Material der Manschette örtlich festgehalten und abgestützt wird. Somit wird ein gleichmäßiger Druck auf die Dichtfläche ausgeübt. Dabei können auch zusätzliche Dichtelement zum Einsatz gelangen, wie die DE-C-2 608 161 und die DE-A-2 846 439 zeigen.

Zwar wird mit den oben genannten Gestaltungsmöglichkeiten eine Erhöhung der Dichtheit erreicht, die Herstellung der besonders ausgebildeten Manschette oder die Nachbearbeitung des Gehäuses erfordern aber zusätzlichen Aufwand. Die Absperrklappen sind daher wegen der zusätzlichen, komplizierten Konstruktionsmerkmale teurer als das einfache Grundmodell. Insbesondere bei großen Stückzahlen haben die Herstellungkosten eine große Auswirkung auf die Konkurrenzfähigkeit der Absperrarmatur.

Das mit der Erfindung zu lösende Problem liegt darin, daß bei einer einfachen Ausführung die Dichtwirkung im Bereich der Klappenachse durch Ausweichen des elastischen Materials der Manschette nachläßt, wogegen Ausführungen, welche die Dichtheit über längere Zeit erhalten, konstruktiv aufwendig gestaltet sind.

Der Erfindung liegt daher die Aufgabe zugrunde, eine Absperrklappe mit elastischer Manschette zu schaffen, welche ausreichende Dichtheit im Bereich der Klappenachse aufweist und mit einfacher konstruktiver Ausgestaltung auskommt.

Das Problem wird durch die im Anspruch 1 angegebene Lehre gelöst.

Die mit der Erfindung erzielbaren Vorteile liegen insbesondere darin, daß statt aufwendiger Wulstkonturen oder mit Einlagen verstärkter Manschetten die Verbesserung der Dichtheit durch einfach einsetzbare konstruktive Abänderungen des Grundtyps erreicht wird. Das örtliche Übermaß des elastischen Materials des Bundes der Manschette bewirkt beim Zusammendrücken des Bundes zwischen das Gehäuse und die Klappenscheibe eine Erhöhung des Anpreßdruckes im Bereich der Durchlaßöffnung der Klappenachse. Der stetige Zuwachs in der Dicke des Bundes führt im eingebauten Zustand zu einem stetigen Anstieg des Druckes in dem Bund und vermeidet örtliche Spannungsspitzen. Die so geschaffene Druckerhöhung in der Manschette wird im Bereich der Klappenachse über die Zeit erhalten, da durch die Abstützung des Bundes an den Seitenflächen der Gehäusenut das Ausweichen verhindert wird. Besonders gefördert wird die Abstützungswirkung durch eine spielfreie Anlage der Seitenflächen des Bundes an die Seitenflächen der Gehäusenut, wie auch durch eine Durchlaßöffnung verringerten Durchmessers gegenüber der Klappenachse. Alle Maßnahmen bewirken, jede für sich und auch zusammen, eine Druckerhöhung in der Manschette im Bereich der Klappenachse, welche aber erst bei Montage der Klappenscheibe und der Klappenachse erzeugt wird.

Die Klappenachse wird unabhängig von der Stellung der Klappenscheibe mit gegenüber dem Grundtyp erhöhtem Anpreßdruck der Manschette abgedichtet. Damit wird auch bei dem maximal zulässigen Druck im Leitungssystem langzeitig eine vollständige Abdichtung des Gehäuses gegen das Fördermedium sichergestellt.

Vorteilhafte Ausgestaltungen der Erfindung sind in den Ansprüchen 2 und 3 angegeben. Die Weiterbildung nach Anspruch 2 erzeugt in der in das Gehäuse eingebrachten Manschette eine Vorspannung in Umfangsrichtung, welche eine Druckerhöhung in der gesamten Manschette bewirkt. Damit wird im Bereich der Klappenachse das Ausweichen des unter Spannung stehenden elastischen Materials zusätzlich in Umfangsrichtung verhindert und die Druckerhöhung über einen langen Zeitraum aufrechterhalten. Zusätzlich bewirkt die Überlänge eine kraftschlüssige Verbindung der Manschette mit dem Gehäuse, welche gegen axiales Verschieben sichert.

Die Weiterbildung nach Anspruch 3 offenbart einen günstigen Bereich der Längenverhältnisse, in welchem sich für die Montage, den Betrieb, den Abrieb, die Betätigungskräfte und die Dichtheit der Manschette besonders gute Ergebnisse erzielen lassen.

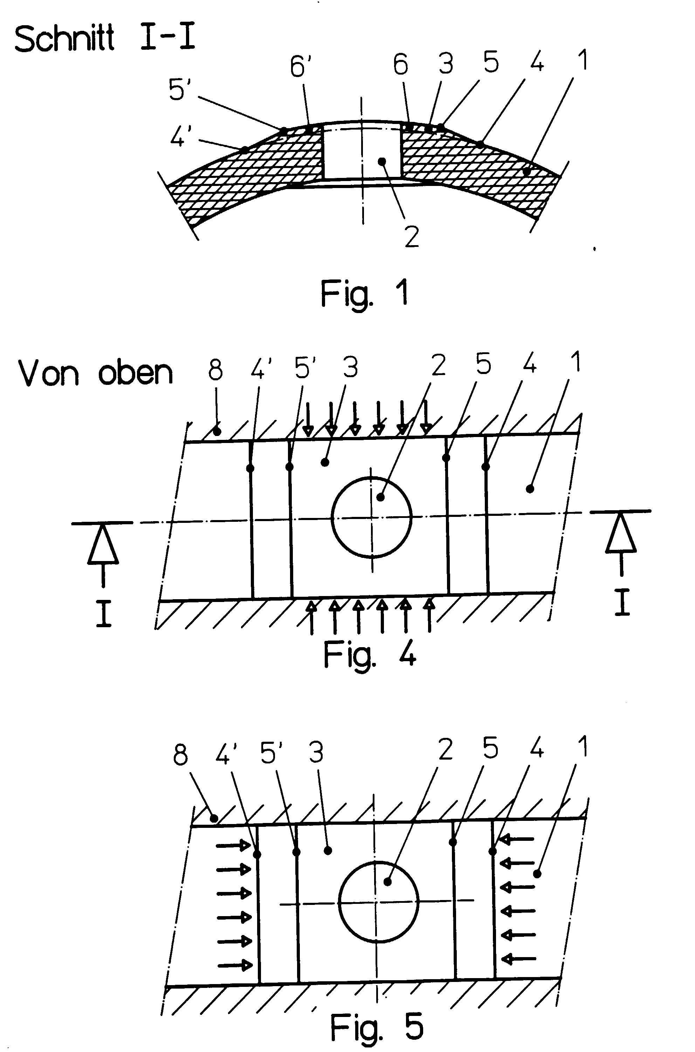

Ein Ausführungsbeispiel der Erfindung gemäß den Ansprüchen 1 bis 3 ist in der Zeichnung dargestellt und wird im folgenden näher beschrieben. Es zeigen
- Fig. 1: einen Querschnitt durch die Manschette entlang der Linie I-I in Fig. 2, die
- Fig. 2: eine konzentrische Anordnung der Klappenachse in der Gehäusebohrung mit der daraus resultierenden Druckverteilung in der Manschette und an der Klappenachse im Querschnitt bei geschlossener Armatur, die
- Fig. 3: die geschlossene Armatur im Schnitt längs der Linie III-III aus Fig. 2, die
- Fig. 4: eine schematisierte Draufsicht der Manschette in eingebautem Zustand mit der Druckverteilung gegen das Gehäuse, die
- Fig. 5: eine Darstellung wie Fig. 4, wobei jedoch die Druckverteilung in Umfangsrichtung schematisch gezeigt wird.

Die Manschette (1) wird in einer umlaufenden Nut (13) eines Gehäuses (8) über ihren umlaufenden Bund (14) am Verschieben in axialer Richtung gehindert. Der Bund (14) der Manschette (1) weist an den Durchgangsöffnungen (2) eine Materialanhäufung (3) auf. Die Materialanhäufung (3) entsteht durch eine stetige, lokale Zunahme in der Dicke des Bundes (14) der Manschette (1) von den Stellen (4, 4') bis (5, 5') und einen Bereich größter Dicke (6, 6') in der Nähe zur Durchgangsöffnung (2).

Im Ausführungsbeispiel ist der Übergang von einem kleineren Umfangskreis mit den Stellen (4, 4') auf einen gröberen, konzentrischen Umfangskreis, auf welchem die Stellen (5, 5') liegen, gezeigt.

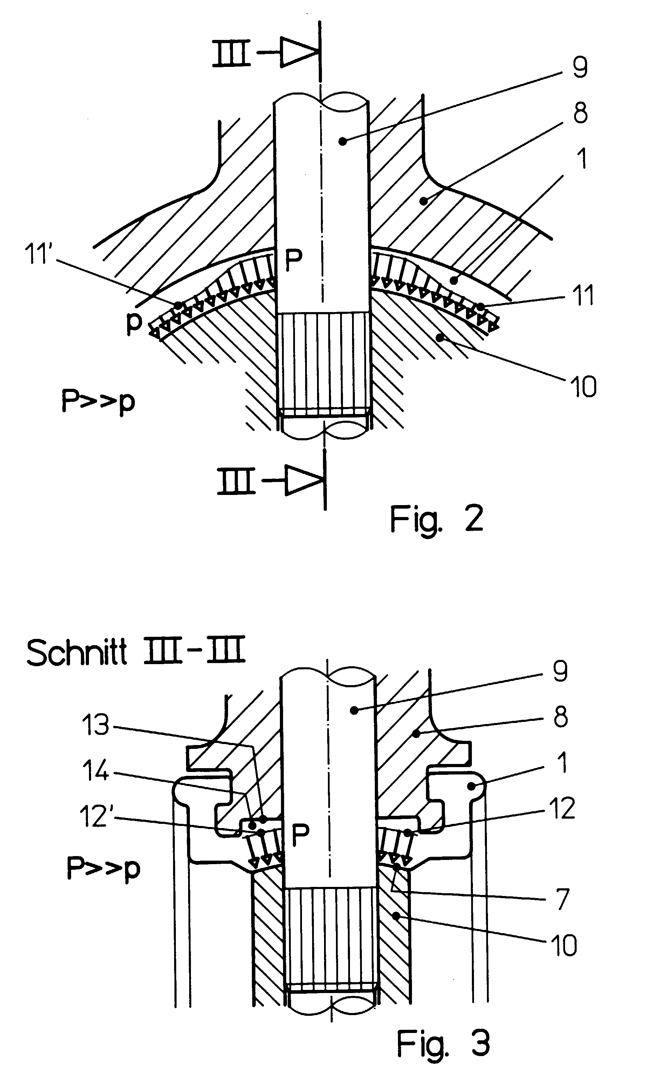

Die eingebaute Manschette (1) wird in den Fig. 2 und 3 näher gezeigt. In dem Gehäuse (8) befindet sich eine um eine Klappenachse (9) drehbare Klappenscheibe (10). Die Klappenachse (9) ist drehfest mit der Klappenscheibe (10) verbunden. Die Materialanhäufung (3) wird bei der Montage der Klappenscheibe verdrängt, so daß das Gehäuse und die Klappenscheibe konzentrisch sind. In der Manschette (1) ergibt sich nach der Montage die skizzierte Druckverteilung (11, 11') in Umfangsrichtung. Dabei wächst der Druck in der Manschette (1) von p auf P stetig an und erreicht sein Maximum in der Umgebung der Klappenachse (9).

Am inneren Umfang der Manschette (1) ist um die Öffnung für die Klappenachse (9) ein Wulst (7) mit einer Oberfläche in Form einer Kugelkalotte ausgebildet, dargestellt in Fig. 3. Die Klappenscheibe (10) weist im Bereich der Klappenachse eine entsprechende kugelige Oberfläche auf und bildet mit dem Wulst (7) eine kugelförmige Dichtfläche.

Die Materialanhäufung (3) ist über die gesamte Breite des Bundes (14) der Manschette (1) konstant und erstreckt sich in Umfangsrichtung über den zweifachen Durchmesser der Klappenachse. Es ergibt sich eine gleichmäßige Druckverteilung (12, 12') über einen langen Zeitraum hinweg, dargestellt durch die Pfeile in Fig. 4. Es ist aber auch möglich, die Materialanhäufung über die Breite des Bundes zu variieren. Eine Anhäufung lediglich in der Mitte hat den Vorteil, daß die Klappenscheibe leichter in die Manschette eintauchen kann. Umgekehrt bewirkt die Anhäufung am Rand eine Erhöhung der Abstützungswirkung.

Wird die Manschette zusätzlich noch gegenüber dem Gehäuse verlängert, beschrieben in Anspruch 2 und 3, so ergibt sich auch in Umfangsrichtung eine Vorspannung. Dies ist in Fig. 5 dargestellt.

## Patentansprüche

1. Absperrklappe, bestehend aus einem Gehäuse (8), einer drehbaren Klappenscheibe (10) und einer von der Klappenscheibe (10) in den Schaft des Gehäuses übergehenden Klappenachse (9) sowie einer elastischen Manschette (1) zur Abdichtung der Klappenscheibe (10) gegen das Gehäuse (8) sowie zur Abdichtung der Klappenachse (9) gegen das Gehäuse (8) und zur Abdichtung der Klappenscheibe (10) zwecks Absperren des Durchflusses, wobei das Gehäuse (8) zur Aufnahme der Manschette (1) eine umlaufende Nut (13) aufweist und die Manschette (1) einen umlaufenden Bund (14) besitzt, welcher in die Nut (13) eingreift, **dadurch gekennzeichnet**, daß der Bund (14) im Bereich der Klappenachse (9) eine Materialanhäufung (3) aufweist, welche durch stetiges Anwachsen des Bundes zu einer Enddicke (6, 6') im Bereich der Durchgangsöffnung (2) der Klappenachse (9) hin entstanden ist.

2. Absperrklappe nach Anspruch 1, dadurch gekennzeichnet, daß die abgewickelte Länge der elastischen Manschette (1) größer als die abgewickelte Länge ihres Sitzes im Gehäuse (8) ist.

3. Absperrklappe nach Anspruch 2, dadurch gekennzeichnet, daß die abgewickelte Länge der elastischen Manschette (1) um 0,5 - 1,5 % größer als die abgewickelte Länge ihres Sitzes im Gehäuse (8) ist.

## Claims

1. A throttle valve comprising a casing (8), a rotatable valve disc (10), a valve shaft (9) extending from the valve disc (10) into the shank of the casing, and a resilient sleeve (1) for sealing the valve disc (10) against the casing (8) and for sealing the valve shaft (9) against the casing (8) and for sealing the valve disc (10) in order to shut off the flow, the casing (8) having a peripheral groove (13) for receiving the sleeve (1), and the sleeve (1) having a peripheral collar (14) which engages in the groove (13), characterised in that the collar (14), in the region of the valve axis (9), has an accumulation of material (3) produced by continuous increase of the collar to a final thickness (6, 6') in the neighbourhood of the opening (2) for the valve shaft (9).

2. A throttle valve according to claim 1, characterised in that the unwound length of the resilient sleeve (1) is greater than the unwound length of its seat in the casing (8).

3. A throttle valve according to claim 2, characterised in that the unwound length of the resilient aleeve (1) is 0.5 - 1.5% greater than the unwound length of its seat in the casing (8).

## Revendications

1. Clapet d'arrêt, constitué d'un corps (8), d'une rondelle (10) de clapet tournante et d'un axe (9) de clapet qui passe de la rondelle (10) de clapet au tronc du corps, ainsi que d'une garniture (1) élastique servant à rendre étanche l'axe (9) de clapet par rapport au corps (8) et à rendre étanche la rondelle (10) de clapet en vue d'arrêter l'écoulement, le corps (8) comportant une rainure (13) faisant tout le tour pour recevoir la garniture (1), et la garniture (1) comportant une nervure (14) faisant tout le tour et rentrant dans la rainure (13), caractérisé en ce que la nervure (14) comporte dans la région de l'axe (9) du clapet une accumulation (3) de matériau qui est formée en accroissant de manière continue la nervure à une épaisseur (6, 6') finale dans la région de l'ouverture (2) de passage de l'axe (9) de clapet.

2. Clapet d'arrêt suivant la revendication 1, caractérisé en ce que la longueur déroulée de la garniture (1) élastique est plus grande que la longueur déroulée de son siège dans le corps (8).

3. Clapet d'arrêt suivant la revendication 2, caractérisé en ce que la longueur déroulée de la garniture (1) élastique est plus grande de 0,5 à 1,5 % que la longueur déroulée de son siège dans le corps (8).
